# EUROPEAN PATENT SPECIFICATION

(11) **EP 3 533 639 B1**
(45) Date of publication and mention of the grant of the patent: **30.12.2020**
(21) Application number: 19157939.0
(22) Date of filing: 19.02.2019
(51) Int. Cl.: B60C 13/00, B60C 13/02, B60C 11/01, B29D 30/06, B29D 30/72

(54) **TIRE**
REIFEN
PNEUMATIQUE

(30) Priority: 02.03.2018 JP 2018037221
(43) Date of publication of application: 04.09.2019
(73) Proprietor: Sumitomo Rubber Industries Ltd., Kobe-shi, Hyogo 651-0072 (JP)
(72) Inventor: NOTSU, Ryoji, Kobe-shi,, Hyogo 651-0072 (JP)
(74) Representative: TBK

(56) References cited:
- EP-A1- 3 332 991
- EP-A2- 2 368 725
- WO-A1-01/17801
- WO-A1-2010/061578
- FR-A- 1 546 547
- FR-A1- 3 027 256
- JP-A- 2003 211 915
- JP-A- 2007 022 367
- JP-A- 2016 198 999
- US-A1- 2012 073 719

## Description

### Field of the Invention

The present invention relates to tires.

### Description of the Related Art

A side surface of a tire may collide against an obstacle such as a curb and the like, or hit against a stone. A sidewall of the side surface of the tire is formed from crosslinked rubber having excellent cut resistance in order to prevent damage due to the collision or hitting.

A projection may be disposed, on the side surface, between a tread end and the maximum width position at which the tire width is largest, in order to improve the cut resistance. The projection projects from the side surface. The projection comes into contact with an obstacle or the like to protect the side surface. Furthermore, the projection contributes to outer appearance of the tire. The projection enhances the outer appearance of the tire. Studies about a tire having a projection on the side surface are reported in FR 1 546 547 A, FR 3 027 256 A, JP 2007 022367 A, JP 2012 006499 A, and post-published EP 3 332 991 A1. These projections should not be confused with a shoulder part as described in JP 2003 211915 A, or a tread buttress as described in WO 01/17801 A1.

In the tire of FR 3 027 256 A, the projection is disposed at about midway between the tread end and the maximum width position. The projection includes a deep, narrow groove that extends through an outer side surface of the projection in a circumferential direction. The projection including the groove redistributes contact force upon contact with an obstacle during running in a way that is less penalizing to a carcass reinforcement in a side wall of the tire.

Cut resistance can be enhanced by enlarging the projection. A large projection can contribute to enhancing of outer appearance. When a tire rolls, deformation is great in the side surface between the tread end and the maximum width position. The greater the projection is, the greater distortion in the outer side surface of the projection is. A projection which is prevented from being damaged due to this distortion while contributing to good cut resistance and outer appearance is required.

An object of the present invention is to provide a tire which has good cut resistance and outer appearance and is also prevented from being damaged.

### SUMMARY OF THE INVENTION

A tire of the present invention includes the features specified in claim 1.

In the tire of the present invention, the projection is disposed between the tread end and the maximum width position on the side surface in a region in which a distance from an outer side end of the tire is 15% to 45% of a cross-sectional height H1 of the tire in a radial direction. The projection has a groove that extends through the outer side surface in the circumferential direction. A width of the groove is not less than 1.5 mm and not greater than 3.0 mm. A depth of the groove is not less than 15% of a thickness of the projection and not greater than 30% of the thickness of the projection. The groove effectively reduces distortion of the outer side surface of the projection. In the tire, even when the projection is enlarged, the outer side surface of the projection is prevented from becoming an originating point of damage. The large projection contributes to good cut resistance and outer appearance. In the tire, damage is prevented while good cut resistance and outer appearance are obtained.

A ratio (Wi/Wo) of a width Wi of a portion, of the projection, which is disposed inward of the groove in a radial direction relative to a width Wo of a portion, of the projection, which is disposed outward of the groove in the radial direction is preferably not less than 1.5 and preferably not greater than 2.5.

A ratio (Ti/To) of a thickness Ti of a portion, of the projection, which is disposed inward of the groove in a radial direction relative to a thickness To of a portion, of the projection, which is disposed outward of the groove in the radial direction is preferably not less than 0.95 and preferably not greater than 1.05.

The tire is preferably produced by using a mold which has a first part and a second part and has a dividing line, between the first part and the second part, which extends in the circumferential direction and comes into contact with the side surface. The groove preferably overlaps an imaginary line, on the side surface, corresponding to the dividing line.

The present invention is also directed to a method for producing the tire. The method includes: (1) a step of forming a raw cover for the tire; and (2) a step of vulcanizing the raw cover. In the step (2), the raw cover is pressurized and heated in a mold that has a first part and a second part which come into contact with the side surface, that has a dividing line, between the first part and the second part, which extends in a circumferential direction, that has a protrusion extending in the circumferential direction for forming, on an outer side surface of the projection, a groove extending in the circumferential direction, and that has the dividing line disposed such that the dividing line overlaps the protrusion.

### BRIEF DESCRIPTION OF THE DRAWINGS

FIG. 1 illustrates an outline of a part of a cross-section of a tire according to one embodiment of the present invention;
FIG. 2 is a perspective view of a part of an outer surface of the tire shown in FIG. 1;
FIG. 3 is an enlarged view of a projection shown in FIG. 1;
FIG. 4 is a plan view illustrating an example of a mold used for producing the tire shown in FIG. 1;
FIG. 5 is a cross-sectional view taken along a line V-V in FIG. 4; and
FIG. 6 is an enlarged cross-sectional view of a part of the mold shown in FIG. 5.

### DESCRIPTION OF THE PREFERRED EMBODIMENTS

The following will describe in detail the present invention based on preferred embodiments with reference where appropriate to the accompanying drawing.

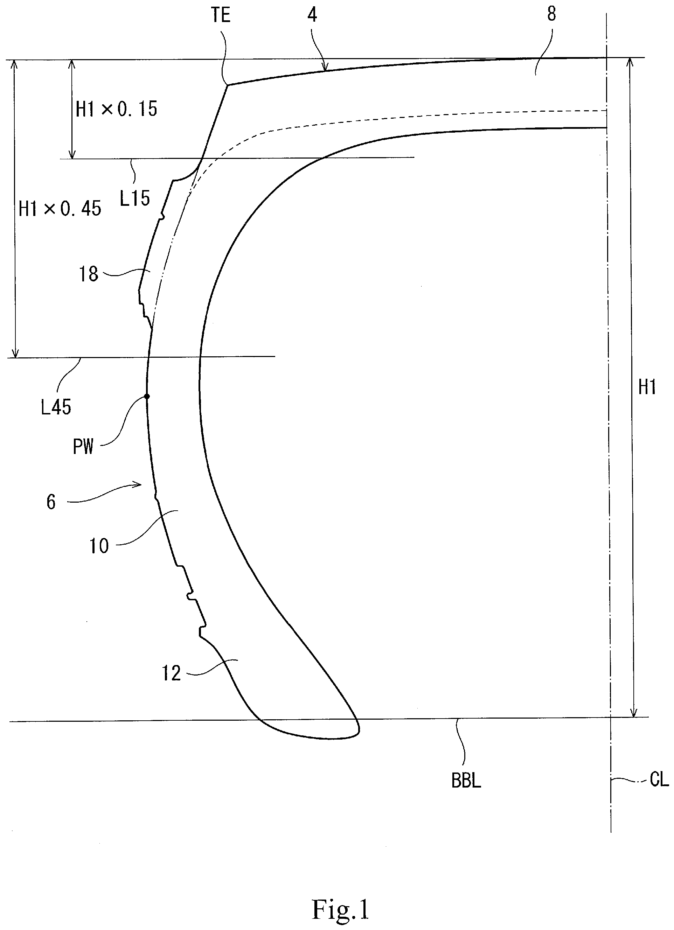

FIG. 1 illustrates a pneumatic tire 2 according to one embodiment of the present invention. FIG. 1 shows an outline of a cross-section perpendicular to the circumferential direction of the tire 2. In FIG. 1, the up-down direction represents the radial direction of the tire 2, the left-right direction represents the axial direction of the tire 2, and the direction perpendicular to the surface of the drawing sheet represents the circumferential direction of the tire 2. In FIG. 1, an alternate long and short dash line CL represents the equator plane of the tire 2. A solid line BBL represents the bead base line. The bead base line BBL corresponds to a line that defines a rim diameter (see JATMA) of a rim on which the tire 2 is mounted.

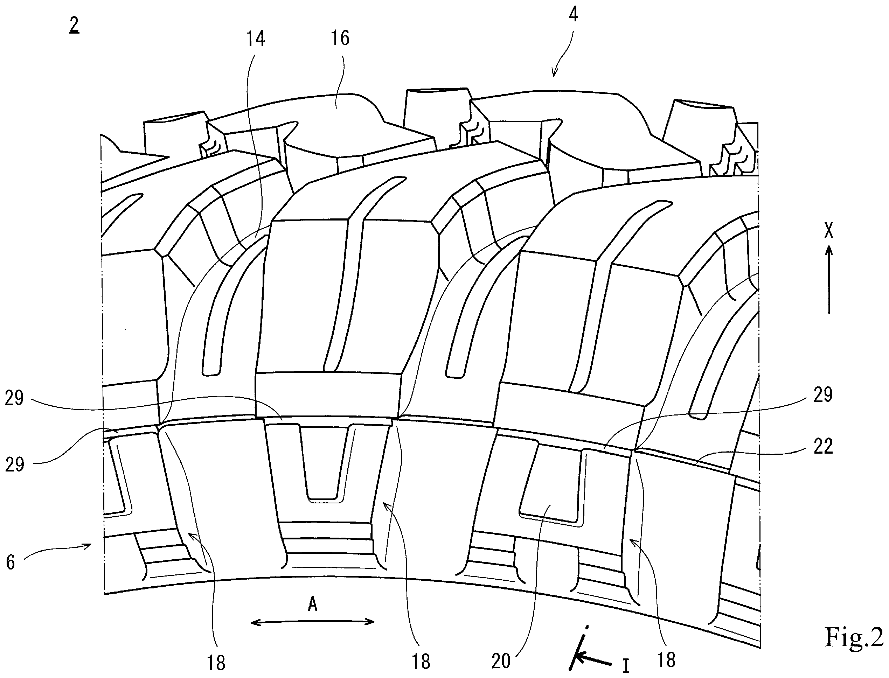

FIG. 2 is a perspective view of a part of a tread surface 4 and a part of a side surface 6 in the tire 2. The side surface 6 represents a region, on the outer surface of the tire 2, which can be viewed in the axial direction. In FIG. 2, a double-headed arrow A represents the circumferential direction of the tire 2, and an arrow X represents the radial direction of the tire 2. FIG. 1 shows an outline of the cross-section, of the tire 2, obtained when the tire 2 is cut, at a position represented by a line I in FIG. 2, by the plane perpendicular to the circumferential direction.

The tire 2 includes a tread 8, sidewalls 10, clinches 12, beads, a carcass, a belt, and an inner line, which are not shown in detail in FIG. 1. The tread surface 4 is formed from the outer surface of the tread 8. The side surface 6 is mainly formed from the outer surface of the sidewall 10. The side surface 6 is also formed from a part of the outer surface of each of the clinch 12 and the tread 8. The tire 2 is of a tubeless type. The tire 2 is mounted to a passenger car.

As shown in FIG. 2, the tread surface 4 has grooves 14. The groove 14 extends in the axial direction and the circumferential direction so as to be curved. A portion, of the tread 8, surrounded by the grooves 14 is referred to as a block 16. The tread 8 has multiple blocks 16. In FIG. 1, reference character TE represents a tread end. The tread end TE is an outer side end, in the axial direction, of an imaginary tread surface 4 on the assumption that the grooves 14 are not provided.

In FIG. 1, reference character PW represents a position on the side surface 6. At the position PW, the tire 2 has the maximum width in the axial direction. The position PW is the maximum width position.

As shown in FIGS. 1 and 2, the tire 2 has a projection 18 on the side surface 6. The projection 18 is disposed between the tread end TE and the maximum width position PW. As shown in FIG. 2, a plurality of the projections 18 are aligned in the circumferential direction. As shown in FIG. 2, the projection 18 has a small projection 20 on the outer side surface thereof. A raised portion 22 that is tapered is disposed between the projections 18 adjacent to each other. In FIG. 1, the small projection 20 is not shown.

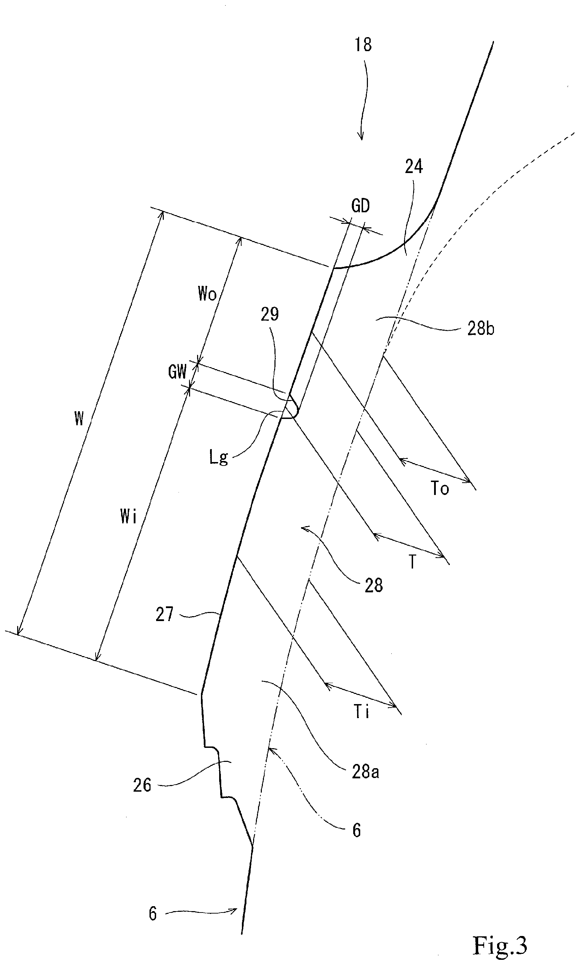

FIG. 3 shows the projection 18 shown in FIG. 1 in an enlarged manner. As shown in FIG. 3, the radially outer side end portion of the projection 18 has a thickness reduced toward the outer side. This portion is referred to as an outer skirt 24 of the projection 18. The radially inner side end portion of the projection 18 has a thickness reduced toward the inner side. This portion is referred to as an inner skirt 26 of the projection 18. A portion between the outer skirt 24 and the inner skirt 26 is a body 28 of the projection 18. In other words, the projection 18 includes the body 28, the outer skirt 24, and the inner skirt 26.

As shown in FIG. 3, the projection 18 includes a groove 29 in an outer side surface 27. As shown in FIG. 2, the groove 29 extends in the circumferential direction. The groove 29 extends from one end of the projection 18 to the other end thereof in the circumferential direction. The groove 29 extends through the outer side surface 27 in the circumferential direction. In FIG. 3, an alternate long and two short dashes line represents the side surface 6 on the assumption that the projection 18 is not provided.

A method for producing the tire 2 includes a step of forming a raw cover, and a step of vulcanizing the raw cover. In the step of forming the raw cover, components of the tire 2 are assembled to form the raw cover. In the step of vulcanizing the raw cover, the raw cover is vulcanized in a mold.

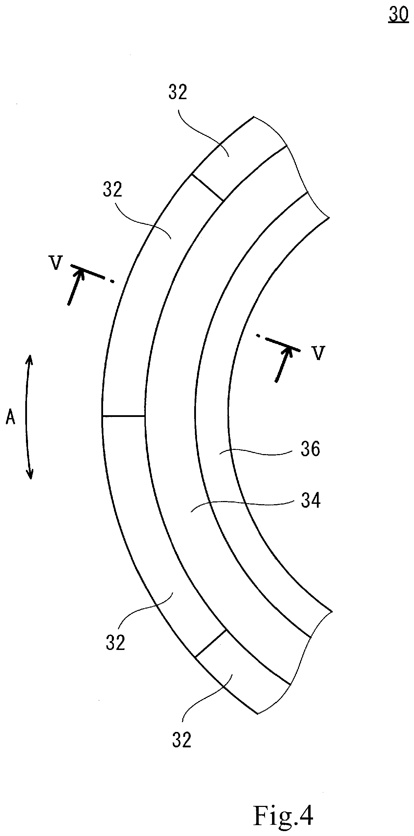

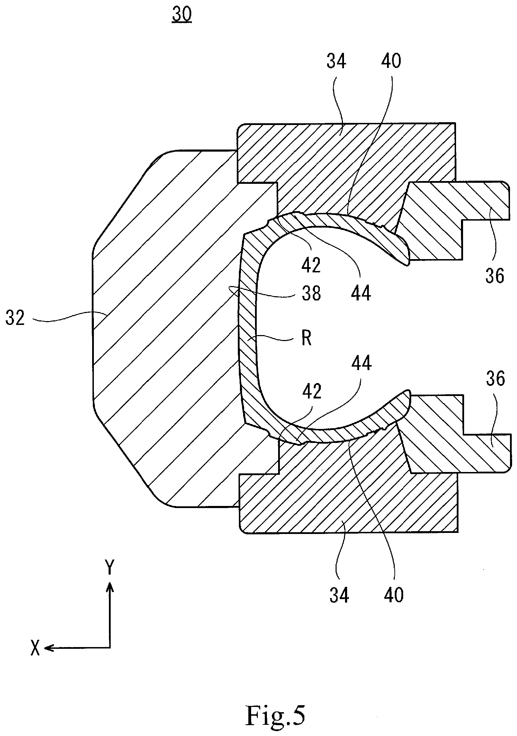

FIGS. 4 and 5 illustrate an example of a mold 30. FIG. 4 is a plan view of the mold 30. In FIG. 4, the direction perpendicular to the surface of the drawing sheet represents the axial direction, and a direction indicated by a double-headed arrow A represents the circumferential direction. FIG. 5 is a cross-sectional view taken along a line V-V in FIG. 4. In FIG. 5, a direction indicated by an arrow X represents the radial direction, a direction indicated by an arrow Y represents the axial direction, and the direction perpendicular to the surface of the drawing sheet represents the circumferential direction. In FIG. 5, a raw cover R in the mold 30 is also shown.

As shown in FIGS. 4 and 5, the mold 30 includes a plurality of segments 32, a pair of side plates 34, and a pair of bead rings 36. These are referred to as constituent elements of the mold 30. As shown in FIG. 4, the planar shape of the segment 32 is a substantially arc-shape. The plurality of segments 32 are arranged so as to be ring-shaped. The side plates 34 and the bead rings 36 are each substantially ring-shaped.

In FIG. 5, the mold 30 is closed. In this state, inner surfaces of the segments 32, inner surfaces of the side plates 34, and inner surfaces of the bead rings 36 are combined to form a cavity surface. The cavity surface contacts with the raw cover R, to form an outer surface of the tire 2. A boundary between adjacent constituent elements on the cavity surface is referred to as a dividing line.

As shown in FIG. 5, a tread surface 38 of the raw cover R contacts with the inner surfaces of the segments 32. The inner surfaces of the segments 32 have peaks corresponding to the grooves 29 of the tread surface 4, which is not shown. Side surfaces 40 of the raw cover R contact with the inner surfaces of the segments 32 and the inner surfaces of the side plates 34. The radially outer side portion of the side surface 40 of the raw cover R contacts with the inner surface of the segment 32. The radially inner side portion of the side surface 40 of the raw cover R contacts with the inner surface of the side plate 34. A dividing line 42 between the segment 32 and the side plate 34 contacts with the side surface 40.

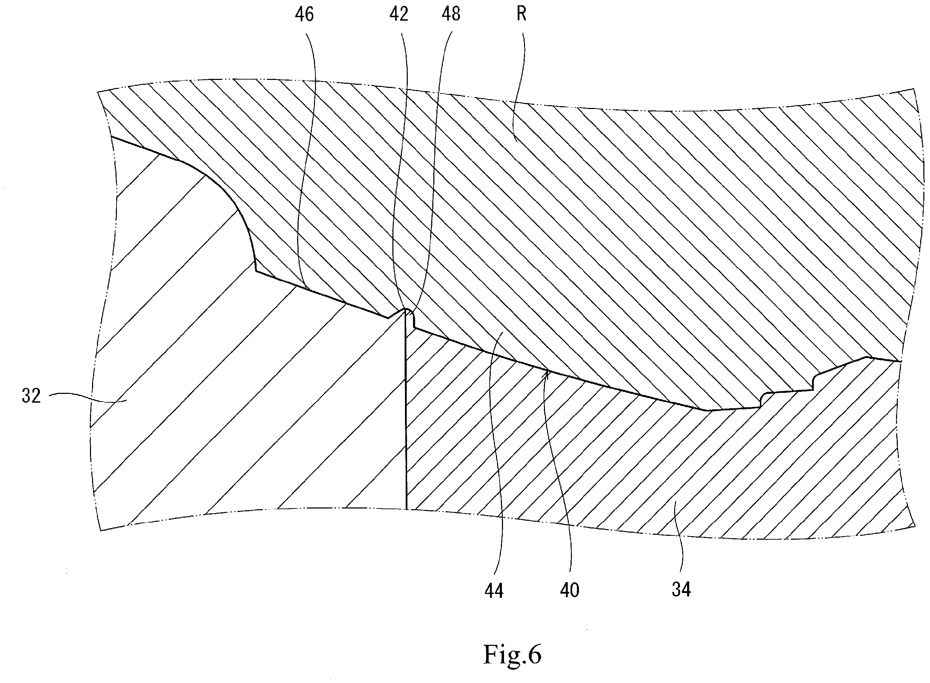

FIG. 6 is an enlarged view of a portion near the dividing line 42 between the segment 32 and the side plate 34 which are shown in FIG. 5. As shown in FIG. 6, a projection 44 of the side surface 40 of the raw cover R contacts with the inner surface of the segment 32 and the inner surface of the side plate 34. The projection 44 contacts with the dividing line 42 between the segment 32 and the side plate 34. A recess 46 for forming the projection 18 of the tire 2 is formed in the inner surface of the segment 32 and the inner surface of the side plate 34. A protrusion 48 for forming the groove 29 of the outer side surface 27 of the projection 18 is formed at the bottom of the recess 46. The protrusion 48 extends in the circumferential direction. In the mold 30, the protrusion 48 overlaps the dividing line 42 between the segment 32 and the side plate 34.

The raw cover R in the mold 30 is pressurized and heated in the mold 30. A rubber composition of the raw cover R flows due to the pressurizing and heating. The rubber causes crosslinking reaction due to the heating to obtain the tire 2.

As described above, the protrusion 48, of the mold 30, for forming the groove 29 of the projection 18 of the tire 2 overlaps the dividing line 42 between the segment 32 and the side plate 34. In other words, in the tire 2 produced by using the mold 30, when VL represents an imaginary line, on the side surface 6, corresponding to the dividing line 42, the groove 29 of the projection 18 overlaps the imaginary line VL.

The mold 30 used for producing the tire 2 is not limited to the mold 30 having the structure shown in FIGS. 4 and 5. The mold may be any mold which has a first part and a second part that come into contact with the side surface 6 of the tire 2, and in which the dividing line between the first and the second parts extends in the circumferential direction, a protrusion for forming the groove 29 in the projection 18 extends in the circumferential direction, and the dividing line overlaps the protrusion. In the mold 30 shown in FIGS. 4 and 5, the segment 32 corresponds to the first part and the side plate 34 corresponds to the second part.

Hereinafter, the actions and effects of the present invention will be described.

In the tire 2 according to the present invention, the projection 18 is disposed between the tread end TE and the maximum width position PW on the side surface 6. The projection 18 disposed between the tread end TE and the maximum width position PW contributes to protection of the side surface 6. The projection 18 contributes to outer appearance of the tire 2.

In the tire 2, the projection 18 includes the groove 29 that extends through the outer side surface 27 in the circumferential direction. The groove 29 effectively reduces distortion of the outer side surface 27 of the projection 18 when the side surface 6 is deformed. In the tire 2, even when the large projection 18 is disposed, the outer side surface 27 of the projection 18 is prevented from becoming an originating point of damage. The large projection 18 effectively protects the side surface 6. The large projection 18 can effectively contribute to enhancing of outer appearance. In the tire 2, damage is prevented while good cut resistance and outer appearance are obtained.

In FIG. 1, a double-headed arrow H1 represents a cross-sectional height of the tire 2. A straight line L15 represents a straight line that extends in the axial direction at a position where a distance from the outer side end of the tire 2 is 15% of the height H1 in the radial direction. A straight line L45 represents a straight line that extends in the axial direction at a position where a distance from the outer side end of the tire 2 is 45% of the height H1 in the radial direction. In the tire, the groove 29 is disposed in a region between the straight line L15 and the straight line L45. Deformation is great in the region between the straight line L15 and the straight line L45 when the tire 2 rolls. Distortion of the outer side surface 27 of the projection 18 disposed in this region tends to increase. By the groove 29 being disposed in this region, the groove 29 effectively reduces distortion of the outer side surface 27 of the projection 18. In the tire 2, the outer side surface 27 of the projection 18 is prevented from becoming an originating point of damage.

In the tire 2, the entirety of the projection 18 that includes the inner skirt 26 and the outer skirt 24 is preferably disposed in the region between the straight line L15 and the straight line L45. The projection 18 disposed in this region effectively contributes to protection of the side surface 6. The projection 18 disposed in this region is likely to be conspicuous. The projection 18 effectively contributes to the outer appearance of the tire 2.

The tire 2 is pressurized and heated in the mold 30. At this time, adjacent constituent elements of the mold 30 may be displaced from each other. For example, the segment 32 of the mold 30 shown in FIG. 5 may be displaced from a predetermined position relative to the side plate 34 by several millimeters. As illustrated in the mold 30 shown in FIG. 5, the dividing line of the mold contacts with the side surface of a raw cover in general. The dividing line may contact with the projection on the side surface. Displacement between the constituent elements, of the mold, which form the dividing line may cause distortion of the shape of the projection of the tire. The projection on the side surface is likely to be conspicuous. This particularly exerts an influence on the outer appearance of the tire. It is important to inhibit the outer appearance of the tire from being influenced by displacement between the constituent elements of the mold.

In the tire 2, the groove 29 of the projection 18 overlaps the imaginary line VL, on the side surface 6, corresponding to the dividing line 42 between the segment 32 and the side plate 34. Even when the segment 32 and the side plate 34 are displaced from each other, distortion of the shape of the projection 18 is less likely to be conspicuous. In the tire 2, the outer appearance is inhibited from being influenced by displacement between the constituent elements of the mold 30. The tire 2 can have excellent outer appearance.

In FIG. 3, a straight line Lg represents an imaginary line that connects between both ends, in the radial direction, of an opening of the groove 29. A double-headed arrow GD represents a depth of the groove 29. The depth GD represents a distance from the straight line Lg to the bottom of the groove 29. A double-headed arrow T represents a thickness of the projection 18. The thickness T is measured at a position of the groove 29. Specifically, the thickness T represents a distance from the straight line Lg to the side surface 6 on the assumption that the projection 18 is not provided, and the distance is measured along the line that is perpendicular to the straight line Lg and is drawn from the center of the straight line Lg. The thickness T is measured on the assumption that the small projection 20 is not disposed on the outer side surface 27 of the projection 18.

A ratio (GD/T) of the depth GD to the thickness T is not less than 15%. When the ratio (GD/T) is not less than 15%, the groove 29 effectively reduces distortion of the outer side surface 27 of the projection 18. When the ratio (GD/T) is not less than 15%, distortion at the bottom of the groove 29 is inhibited when the side portion is deformed. In the tire 2, the outer side surface 27 and the bottom of the groove 29 in the projection 18 are prevented from becoming originating points of damage. In this viewpoint, the ratio (GD/T) is preferably not less than 20%. The ratio (GD/T) is not greater than 30%. When the ratio (GD/T) is not greater than 30%, the projection 18 can have sufficient cut resistance. When collision against an obstacle or the like occurs, damage to the projection 18 is reduced. In this viewpoint, the ratio (GD/T) is preferably not greater than 25%.

In FIG. 3, a double-headed arrow GW represents a width of the groove 29. The width GW corresponds to the length of the straight line Lg. The width GW is not less than 1.5 mm. When the width GW is not less than 1.5 mm, the groove 29 effectively reduces distortion of the outer side surface 27 of the projection 18. When the width GW is not less than 1.5 mm, distortion at the bottom of the groove 29 is inhibited when the side portion is deformed. The outer side surface 27 and the bottom of the groove 29 in the projection 18 are prevented from becoming originating points of damage. In this viewpoint, the width GW is preferably not less than 1.8 mm. The width GW is not greater than 3.0 mm. When the width GW is not greater than 3.0 mm, the projection 18 can have sufficient cut resistance. When collision against an obstacle or the like occurs, damage to the projection 18 is reduced. Furthermore, when the width GW is not greater than 3.0 mm, unity in design of the projection 18 is maintained. The tire 2 has excellent outer appearance. In this viewpoint, the width GW is preferably not greater than 2.5 mm.

The thickness T is preferably not less than 4.0 mm. When the thickness T is not less than 4.0 mm, the projection 18 effectively contributes to protection of the side surface 6. The tire 2 can have excellent cut resistance. Furthermore, the projection 18 is likely to be conspicuous. The projection 18 effectively contributes to outer appearance of the tire 2. In this viewpoint, the thickness T is more preferably not less than 5.0 mm. The thickness T is preferably not greater than 8.0 mm. When the thickness T is not greater than 8.0mm, influence of the projection 18 on the mass of the tire 2 is reduced. In this viewpoint, the thickness T is more preferably not greater than 7.0 mm.

A portion, of the body 28 of the projection 18, which is disposed radially inward of the groove 29 is referred to as an inner body 28a. A portion, of the body 28 of the projection 18, which is disposed radially outward of the groove 29 is referred to as an outer body 28b. In FIG. 3, a double-headed arrow Wi represents a width of the inner body 28a. The width is measured along the outer side surface 27 of the body 28. A double-headed arrow Wo represents a width of the outer body 28b. The width is measured along the outer side surface 27 of the body 28.

A ratio (Wi/Wo) of the width Wi to the width Wo is preferably not less than 1.5. Deformation is great in a radially outer side portion of the side surface 6 when the tire 2 rolls. Distortion is likely to be greater in the outer body 28b than in the inner body 28a. When the ratio (Wi/Wo) is not less than 1.5, the outer body 28b can be made small. This effectively reduces distortion of the outer side surface 27 of the outer body 28b. In the tire 2, the outer side surface 27 of the outer body 28b is prevented from becoming an originating point of damage. The ratio (Wi/Wo) is preferably not greater than 2.5. When the ratio (Wi/Wo) is not greater than 2.5, the size of the inner body 28a can be appropriately regulated. This effectively reduces distortion of the outer side surface 27 of the inner body 28a. In the tire 2, the outer side surface 27 of the inner body 28a is prevented from becoming an originating point of damage.

In FIG. 3, a double-headed arrow Ti represents a thickness of the inner body 28a. The thickness Ti is measured at the center, in the width direction, of the inner body 28a. The thickness Ti is measured on the assumption that the small projection 20 is not disposed on the outer side surface 27 of the projection 18. A double-headed arrow To represents a thickness of the outer body 28b. The thickness To is measured at the center, in the width direction, of the outer body 28b. A ratio (Ti/To) of the thickness Ti to the thickness To is preferably not less than 0.95 and preferably not greater than 1.05. When the ratio (Ti/To) is not less than 0.95 and not greater than 1.05, difference in distortion between the inner body 28a and the outer body 28b is prevented from increasing. In the tire 2, the outer side surface 27 of the projection 18 is prevented from becoming an originating point of damage.

In FIG. 3, a double-headed arrow W represents a width of the body 28. The width is measured along the outer side surface 27 of the body 28. A ratio (W/H1) of the width W to the cross-sectional height H1 is preferably not less than 10%. When the ratio (W/H1) is not less than 10%, the projection 18 effectively contributes to protection of the side surface 6. The tire 2 has excellent cut resistance. Furthermore, the projection 18 is likely to be conspicuous. The projection 18 effectively contributes to outer appearance of the tire 2. The ratio (W/H1) is preferably not greater than 25%. When the ratio (W/H1) is not greater than 25%, distortion at the outer side surface 27 of the projection 18 is effectively inhibited.

In the present invention, the dimensions and angles of the components of the tire 2 are measured in a state where the tire 2 is mounted on a normal rim, and inflated with air to a normal internal pressure. During the measurement, no load is applied to the tire 2. In the description herein, the normal rim represents a rim that is specified according to the standard with which the tire 2 complies. The "standard rim" in the JATMA standard, the "Design Rim" in the TRA standard, and the "Measuring Rim" in the ETRTO standard are included in the normal rim. In the description herein, the normal internal pressure represents an internal pressure that is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard, are included in the normal internal pressure.

### EXAMPLES

### [Example 1]

A tire shown in FIG. 1 was produced. The size of the tire was 285/70R17. The specifications of the projection disposed on the side surface of the tire are indicated in Table 1. The tire was produced using the mold shown in FIGS. 4 to 6. The imaginary line, on the side surface, corresponding to the dividing line between the segment and the side plate in the mold overlapped the groove. The ratio (W/H1) was 15%, and the thickness T was 6 mm.

### [Comparative example 1]

A tire of comparative example 1 (abbreviated as "Comp. Ex. 1") was obtained in the same manner as for example 1 except that the projection had no grooves. Since the projection had no grooves, the imaginary line, on the side surface, corresponding to the dividing line did not overlap a groove.

### [Examples 2 to 3]

Tires of examples 2 to 3 were each obtained in the same manner as for example 1 except that the ratio (GD/T) had a value indicated in Table 1.

### [Examples 4 to 5]

Tires of examples 4 to 5 were each obtained in the same manner as for example 1 except that the width GW of the groove had a value indicated in Table 1.

### [Distortion of outer side surface]

Each tire was mounted on a normal rim (size=7.5J), and inflated with air to a normal internal pressure. A vertical load corresponding to the maximum applied load defined in JATMA was applied to the tire. For each of the tires of examples and comparative example, variation values of the widths, on the outer side surfaces, of all the projections were measured, and the largest value was obtained. For the tires of examples, the sum of the variation value of the width, on the outer side surface, of the outer body, and the variation value of the width, on the outer side surface, of the inner body was used as the variation value of the width, on the outer side surface, of the projection. For the tire of comparative example 1, the variation value of the width, on the outer side surface, of the body was used as the variation value of the width, on the outer side surface, of the projection. Based on the reciprocal of each of the largest values, distortion of the outer side surface was evaluated. The results are each indicated in Table 1 as an index with the index of comparative example 1 being 100. The greater the value of the index is, the better the evaluation is.

### [Distortion of groove bottom]

Each tire was mounted on a normal rim (size=7.5J), and inflated with air to a normal internal pressure. A vertical load corresponding to the maximum applied load defined in JATMA was applied to the tire. For each of the tires of examples and comparative example, variation values of the widths near the groove bottoms (a portion in a range in which a distance from the mid-point of the deepest portion of the groove was not greater than 0.1 mm) of all the projections were measured, and the largest value was obtained. Based on the largest value, distortion of the groove bottom was evaluated. The results are each indicated in Table 1 as an index with the index of example 1 being 100. The greater the value of the index is, the better the evaluation is.

### [Cut resistance]

Each tire was mounted on a normal rim (size=7.5J), and mounted to a rear-wheel-drive passenger car. The internal pressure of the tire was a normal internal pressure. After the mounting, a vertical load corresponding to the maximum applied load defined in JATMA was applied to the tire. The vehicle was driven by a driver so as to run, by 1000 km, on a rally course called "dirt course" in Japan. Thereafter, the tire was dismounted from the rim. The side surface of the tire was visually observed, and the number of cracks and the sizes thereof were confirmed. The results are each indicated in Table 1 as an index with the index of comparative example 1 being 100. The greater the value of the index is, the better the evaluation is. The greater the value of the index is, the more excellent cut resistance is.

### [Outer appearance in the case of displacement in mold being generated]

When each tire was produced, displacement in position by 0.5 mm was generated between the segment and the side plate. The outer appearance of the completed tire was visually observed. The results are each indicated in column of "Outer appearance" in Table 1 as an index with the index of comparative example 1 being 100. The greater the value of the index is, the better the evaluation is.

**Table 1 Evaluation result**

| | Comp. Ex. 1 | Example 2 | Example 1 | Example 3 | Example 4 | Example 5 |
|---|---|---|---|---|---|---|
| Ratio (GD/T) [%] | - | 15 | 20 | 30 | 20 | 20 |
| Groove width GW [mm] | - | 2.0 | 2.0 | 2.0 | 1.5 | 3.0 |
| Ratio (Wi/Wo) | - | 2.0 | 2.0 | 2.0 | 2.0 | 2.0 |
| Ratio (Ti/To) | - | 1.0 | 1.0 | 1.0 | 1.0 | 1.0 |
| Distortion of outer side surface | 100 | 102 | 105 | 105 | 102 | 102 |
| Distortion of groove bottom | - | 100 | 100 | 98 | 98 | 102 |
| Cut resistance | 100 | 100 | 100 | 100 | 100 | 100 |
| Outer appearance | 100 | 110 | 110 | 110 | 105 | 107 |

As indicated in Table 1, comprehensive evaluation of the tires of examples is high. The evaluation result clearly indicates that the present invention is superior.

The tire according to the present invention is applicable to various vehicles.

The foregoing description is in all aspects illustrative, and various modifications can be devised without departing from the essential features of the invention specified in the claims.

## Claims

1. A tire (2) comprising:
a projection (18) disposed between a tread end (TE) and a maximum width position (PW) on a side surface (6) of the tire (2), wherein
the projection (18) includes a single groove (29) that extends through an outer side surface (27) of the projection (18) in a circumferential direction (A), and
the groove (29) is disposed in a region in which a distance from an outer side end of the tire (2) is 15% to 45% of a cross-sectional height (H1) of the tire (2) in a radial direction (X),
**characterized in that**
a width (GW) of the groove (29) is not less than 1.5 mm and not greater than 3.0 mm, and
a depth (GD) of the groove (29) is not less than 15% of a thickness (T) of the projection (18) and not greater than 30% of the thickness (T) of the projection (18).

2. The tire (2) according to claim 1, wherein a ratio (Wi/Wo) of a width Wi of a portion, of the projection (18), which is disposed inward of the groove (29) in a radial direction (X) relative to a width Wo of a portion, of the projection (18), which is disposed outward of the groove (29) in the radial direction (X) is not less than 1.5 and not greater than 2.5.

3. The tire (2) according to claim 1, wherein a ratio (Ti/To) of a thickness Ti of a portion, of the projection (18), which is disposed inward of the groove (29) in a radial direction (X) relative to a thickness To of a portion, of the projection (18), which is disposed outward of the groove (29) in the radial direction (X) is not less than 0.95 and not greater than 1.05.

4. The tire (2) according to claim 1, wherein
the tire (2) is produced by using a mold (30) which has a first part (32) and a second part (34) and has a dividing line (42), between the first part (32) and the second part (34), which extends in the circumferential direction (A) and comes into contact with the side surface (6), and
the groove (29) overlaps an imaginary line, on the side surface (6), corresponding to the dividing line (42).

5. A method for producing the tire (2) according to claim 1, the method comprising:
(1) a step of forming a raw cover (R) for the tire (2); and
(2) a step of vulcanizing the raw cover (R), wherein
in the step (2), the raw cover (R) is pressurized and heated in a mold (30) that has a first part (32) and a second part (34) which come into contact with the side surface (6), that has a dividing line (42), between the first part (32) and the second part (34), which extends in a circumferential direction (A), that has a protrusion (48) extending in the circumferential direction (A) for forming, on the outer side surface (27) of the projection (18), the groove (29) extending in the circumferential direction (A), and that has the dividing line (42) disposed such that the dividing line (42) overlaps the protrusion (48).

## Patentansprüche

1. Reifen (2) mit:
einem Vorsprung (18), der auf einer Seitenfläche (6) des Reifens (2) zwischen einem Laufflächenende (TE) und einer Position maximaler Breite (PW) angeordnet ist, wobei
der Vorsprung (18) eine einzelne Nut (29) aufweist, die sich in einer Umfangsrichtung (A) durch eine äußere Seitenfläche (27) des Vorsprungs (18) erstreckt, und
die Nut (29) in einem Bereich angeordnet ist, in dem ein Abstand von einem äußeren Seitenende des Reifens (2) 15% bis 45% einer Querschnittshöhe (H1) des Reifens (2) in einer radialen Richtung (X) beträgt,
**dadurch gekennzeichnet, dass**
eine Breite (GW) der Nut (29) nicht weniger als 1,5 mm und nicht mehr als 3,0 mm beträgt und
eine Tiefe (GD) der Nut (29) nicht weniger als 15% einer Dicke (T) des Vorsprungs (18) und nicht mehr als 30% der Dicke (T) des Vorsprungs (18) beträgt.

2. Reifen (2) nach Anspruch 1, wobei ein Verhältnis (Wi/Wo) einer Breite Wi eines Abschnitts des Vorsprungs (18), der in einer radialen Richtung (X) innerhalb der Nut (29) angeordnet ist, bezogen auf eine Breite Wo eines Abschnitts des Vorsprungs (18), der in der radialen Richtung (X) außerhalb der Nut (29) angeordnet ist, nicht weniger als 1,5 und nicht mehr als 2,5 beträgt.

3. Reifen (2) nach Anspruch 1, wobei ein Verhältnis (Ti/To) einer Dicke Ti eines Abschnitts des Vorsprungs (18), der in einer radialen Richtung (X) innerhalb der Nut (29) angeordnet ist, bezogen auf eine Dicke To eines Abschnitts des Vorsprungs (18), der in der radialen Richtung (X) außerhalb der Nut (29) angeordnet ist, nicht weniger als 0,95 und nicht mehr als 1,05 beträgt.

4. Reifen (2) nach Anspruch 1, wobei
der Reifen (2) unter Verwendung einer Form (30) hergestellt ist, die einen ersten Teil (32) und einen zweiten Teil (34) hat und zwischen dem ersten Teil (32) und dem zweiten Teil (34) eine Trennlinie (42) hat, die sich in der Umfangsrichtung (A) erstreckt und mit der Seitenfläche (6) in Kontakt kommt, und
die Nut (29) eine gedachte Linie auf der Seitenfläche (6) überlappt, die der Trennlinie (42) entspricht.

5. Verfahren zur Herstellung des Reifens (2) gemäß Anspruch 1, wobei das Verfahren Folgendes umfasst:
(1) einen Schritt, in dem eine Rohdecke (R) für den Reifen (2) ausgebildet wird; und
(2) einen Schritt, in dem die Rohdecke (R) vulkanisiert wird, wobei
die Rohdecke (R) in dem Schritt (2) in einer Form (30) unter Druck gesetzt und erhitzt wird, welche einen ersten Teil (32) und einen zweiten Teil (34) hat, die mit der Seitenfläche (6) in Kontakt kommen, welche zwischen dem ersten Teil (32) und dem zweiten Teil (34) eine Trennlinie (42) hat, die sich in einer Umfangsrichtung (A) erstreckt, welche einen Überstand (48) hat, der sich in der Umfangsrichtung (A) erstreckt, um auf der äußere Seitenfläche (27) des Vorsprungs (18) die Nut (29) auszubilden, die sich in der Umfangsrichtung (A) erstreckt, und welche die Trennlinie (42) derart angeordnet hat, dass die Trennlinie (42) den Überstand (48) überlappt.

## Revendications

1. Pneumatique (2) comprenant :
une saillie (18) disposée entre une extrémité de bande de roulement (TE) et une position de largeur maximum (PW) sur une surface latérale (6) du pneumatique (2), dans lequel :
la saillie (18) comprend une seule rainure (29) qui s'étend à travers une surface latérale externe (27) de la saillie (18) dans une direction circonférentielle (A), et
la rainure (29) est disposée dans une région dans laquelle une distance par rapport à une extrémité latérale externe du pneumatique (2) représente de 15 % à 45 % d'une hauteur transversale (H1) du pneumatique (2) dans une direction radiale (X),
**caractérisé en ce que** :
une largeur (GW) de la rainure (29) n'est pas inférieure à 1,5 mm et n'est pas supérieure à 3,0 mm, et
une profondeur (GD) de la rainure (29) n'est pas inférieure à 15% d'une épaisseur (T) de la saillie (18) et n'est pas supérieure à 30 % de l'épaisseur (T) de la saillie (18).

2. Pneumatique (2) selon la revendication 1, dans lequel un rapport (Wi/Wo) d'une largeur Wi d'une partie de la saillie (18), qui est disposée vers l'intérieur de la rainure (29) dans une direction radiale (X) par rapport à une largeur Wo d'une partie de la saillie (18) qui est disposée vers l'extérieur de la rainure (29) dans la direction radiale (X) n'est pas inférieur à 1,5 et n'est pas supérieur à 2,5.

3. Pneumatique (2) selon la revendication 1, dans lequel un rapport (Ti/To) d'une épaisseur Ti d'une partie de la saillie (18) qui est disposée vers l'intérieur de la rainure (29) dans une direction radiale (X) par rapport à une épaisseur To d'une partie de la saillie (18) qui est disposée vers l'extérieur de la rainure (29) dans la direction radiale (X) n'est pas inférieur à 0,95 et n'est pas supérieur à 1,05.

4. Pneumatique (2) selon la revendication 1, dans lequel :
le pneumatique (2) est produit en utilisant un moule (30) qui a une première partie (32) et une seconde partie (34) et a une ligne de division (42), entre la première partie (32) et la seconde partie (34) qui s'étend dans la direction circonférentielle (A) et vient en contact avec la surface latérale (6), et
la rainure (29) chevauche une ligne imaginaire, sur la surface latérale (6) correspondant à la ligne de division (42).

5. Procédé pour produire le pneumatique (2) selon la revendication 1, le procédé comprenant :
(1) une étape pour former un recouvrement brut (R) pour le pneumatique (2) ; et
(2) une étape pour vulcaniser le recouvrement brut (R), dans lequel :
à l'étape (2), le recouvrement brut (R) est mis sous pression et chauffé dans un moule (30) qui a une première partie (32) et une seconde partie (34) qui viennent en contact avec la surface latérale (6), qui a une ligne de division (42) entre la première partie (32) et la seconde partie (34), qui s'étend dans une direction circonférentielle (A) et qui a une saillie (48) s'étendant dans la direction circonférentielle (A) pour former, sur la surface latérale externe (27) de la saillie (18), la rainure (29) s'étendant dans la direction circonférentielle (A) et qui a la ligne de division (42) disposée de sorte que la ligne de division (42) chevauche la saillie (48).
